# EUROPEAN PATENT APPLICATION

(11) **EP 4 474 926 A1**
(43) Date of publication of application: **11.12.2024**
(21) Application number: 24178450.3
(22) Date of filing: 28.05.2024
(51) Int. Cl.: G05B 17/02, G06F 8/61, G06F 9/455, G06F 13/38

(54) **CONTROL DEVICE, CONTROL METHOD, AND CONTROL SYSTEM**

(30) Priority: 01.06.2023 JP 2023091133
(71) Applicant: Yokogawa Electric Corporation, Tokyo 180-8750 (JP)
(72) Inventor: KOBAYASHI, Ryo, Musashino shi, Tokyo, 180-8750 (JP); SAKAMOTO, Kazushi, Musashino shi, Tokyo, 180-8750 (JP)
(74) Representative: Winter, Brandl - Partnerschaft mbB

(57) **Abstract**

A control device (100) includes a communication unit (110), an acquisition unit (121), and a calculation unit (122). The communication unit (110) performs communication with an I/O connection device (200) where an I/O device (400) is connected and an information processing device (300), via a network. The acquisition unit (121) acquires device information related to the I/O device (400) from at least one of a first storage unit (222) included in the I/O connection device (200) and storing the device information and a second storage unit (320) included in the information processing device (300) and storing the device information. The calculation unit (122) performs control calculation related to the I/O device by using the device information (400).

## Description

### FIELD

The present invention relates to a control device, a control method, and a control system.

### BACKGROUND

Process control systems control various state quantities (for example, pressure, temperature, and flow rate) in industrial process at plants and factories (hereinafter simply referred to as "plants" when generally referred to), for example, to implement high-level automatic operation (for example, see Japanese Unexamined Patent Application Publication No. 2021-157391).

Conventional process control systems have specialized controllers unique to vendors, at cores of the systems. These specialized controllers acquire state quantities according to I/O input values from plural sensors (such as flowmeters and thermometers) through I/O connection units.

An I/O connection unit is positioned between a control unit, such as a specialized controller, and an I/O input device, such as a sensor, or an I/O output device, such as an actuator, and provides functions needed for exchange of I/O data between the control unit and the I/O input device or I/O output device.

The specialized controller finds a manipulation quantity for the I/O output device (such as an actuator of a valve) according to a state quantity. Furthermore, the specialized controller provides an I/O output value corresponding to the manipulation quantity through the I/O connection unit to manipulate the I/O output device. The above mentioned various state quantities are controlled by these three functions of the specialized controller.

However, instead of a specialized controller, a general purpose controller has been proposed for a recent open process control system, the general purpose controller having a standard control function (for example, a control function compliant with IEC 61131-3) incorporated in a general purpose device (for example, a PC or a workstation). An increasing number of systems have such a general purpose controller and an I/O connection device (hereinafter also simply referred to as an I/O connection device) connected to each other by a general purpose network (of, for example, Open Platform Communications Unified Architecture (OPC-UA)), the I/O connection device being compatible with the network.

One of the reasons for this is that users of process control systems prefer to keep the cost for introducing the systems low and to have a system environment that facilitates incorporation of digital transformation techniques. Another reason is that the users are thus working with the vendors to implement multivendor environments each having a control function and an I/O connection device connected to each other via an open network.

There is a demand for a simulation function in an open process control system also, the simulation function being equivalent to that of a conventional process control system. However, in an open process control system, a simulation is sometimes made in a state where some of I/O connection devices and a general purpose controller has/have not been prepared.

Therefore, what are proposed through the present disclosure are a control device, a control method, and a control system that enable implementation of a simulation function in an open process control system.

### SUMMARY

It is an object of the present invention to at least partially solve the problems in the conventional technology.

A control device of the present disclosure includes a communication unit, an acquisition unit, and a calculation unit. The communication unit performs communication with an I/O connection device where an I/O device is connected and an information processing device, via a network. The acquisition unit acquires device information related to the I/O device from at least one of a first storage unit included in the I/O connection device and storing the device information and a second storage unit included in the information processing device and storing the device information. The calculation unit performs control calculation related to the I/O device by using the device information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an example of a functional configuration of a process control system using a specialized controller;
FIG. 2 is a table illustrating an example of I/O definition information;
FIG. 3 is a table illustrating an example of soft wiring definition information;
FIG. 4 is a flowchart illustrating an example of a flow of a control process;
FIG. 5 is a flowchart illustrating an example of a flow of a refresh process;
FIG. 6 is a flowchart illustrating an example of a flow of a flush process;
FIG. 7 is a flowchart illustrating an example of a flow of a wiring execution process;
FIG. 8 is a flowchart illustrating an example of a flow of the overall process;
FIG. 9 is a block diagram illustrating an example of a configuration of a process control system according to an embodiment of the present disclosure;
FIG. 10 is a table illustrating an example of network device ID information according to the embodiment of the present disclosure;
FIG. 11 is a table illustrating an example of softwiring definition information according to the embodiment of the present disclosure;
FIG. 12 is a flowchart illustrating an example of a flow of a control process according to the embodiment of the present disclosure;
FIG. 13 is a flowchart illustrating an example of a flow of an update process according to the embodiment of the present disclosure;
FIG. 14 is a flowchart illustrating an example of a flow of a softwiring execution process according to the embodiment of the present disclosure;
FIG. 15 is a diagram illustrating an example of a configuration of a process control system according to another embodiment of the present disclosure;
FIG. 16 is a diagram illustrating an example of a configuration of a process control system according to yet another embodiment of the present disclosure;
FIG. 17 is a flowchart illustrating an example of a flow of an update process by an I/O connection unit according to this other embodiment of the present disclosure; and
FIG. 18 is a diagram illustrating an example of a hardware configuration of a control device.

### DESCRIPTION OF THE EMBODIMENT

Embodiments of a control device, a control method, and a control system disclosed by the present application will hereinafter be described in detail on the basis of the drawings. The invention of the present application is not limited by the embodiments described herein. The same reference signs will be assigned to elements that are the same and redundant description thereof will be omitted as appropriate. The embodiments may be combined as appropriate so long as no contradictions arise from the combination.

### 1. Introduction

### 1.1. Definition of Terms

Some terms used herein for description of techniques according to the present disclosure will be defined as follows.

### Control Function (Control Unit)

A control unit having a control function periodically acquires a state quantity of an industrial process input from an I/O input device, such as a sensor. The control unit has the acquired state quantity as input and executes control logic generated by a user. On the basis of a result of execution of the control logic, the control unit outputs a manipulation quantity for an I/O output device, such as an actuator. The control logic executed by the control unit includes PID control, sequence control, and interpreter language control, for example.

### I/O Disconnection Function (I/O Disconnection Unit)

An I/O disconnection function that an I/O disconnection unit has is a function to partly disconnect or connect an I/O input device and an I/O output device (an I/O input device and an I/O output device may hereinafter be also collectively referred to as I/O devices) in software. This function allows a user to test control logic by using a control function even if the I/O devices have not been actually connected to a process control system.

### Softwiring Function (Softwiring Unit)

A softwiring function that a softwiring unit has is a function to perform virtual wiring in software. The softwiring unit has, as input, output information (a manipulation quantity) from a control function. This output information is acquired from, for example, an I/O image described later. The I/O image periodically holds input and output values to and from I/O devices (output information from a control unit and input information to a control function).

The softwiring unit executes calculation logic generated by a user by having, as input, the output information acquired. On the basis of a result of execution of the calculation logic, the softwiring unit outputs input information (for example, a state simulation quantity simulating a state quantity of an industrial process) to the control function. For example, the softwiring unit outputs the input information to the I/O image.

This softwiring function of the softwiring unit allows a user to test control logic without using the actual I/O devices. For example, softwiring functions made by Yokogawa Electric Corporation include CENTUM wiring function and STARDOM softwiring function (reference URL:
http://www.yokogawa.co.jp/pdf/provide/J/GW/TI/0000031416/0/TI34P02P25-01.pdf).

### Specialized Controller

A specialized controller is a controller unique to a vendor and having a control function. The specialized controller includes, for example, a control function (a control unit) to control a state quantity of an industrial process and an I/O connection function (an I/O connection unit) to manage input and output values to and from an I/O device. For example, specialized controllers made by Yokogawa Electric Corporation include Field Control Station (FCS).

### General Purpose Controller

A general purpose controller is a controller having a control function and used for a general purpose. The general purpose controller is connected to an I/O connection device described later via a network, the I/O connection device being compatible with the network. The general purpose controller includes, for example, a control function (a control unit) to control a state quantity of an industrial process, and a communication function (a communication unit) compatible with a general purpose network and enabling I/O input and output of OPC-UA (reference URL: https://reference.opcfoundatio; Norg/).

### I/O Connection Device

An I/O connection device is a device having an I/O connection function (an I/O connection unit). The I/O connection device is connected to a control function of a general purpose controller via a network. The I/O connection device includes, for example, a network communication function (a communication unit) to receive an I/O input and output request of OPC-UA and an I/O connection function (an I/O connection unit) to manage input and output values to and from an I/O device. For example, I/O connection devices manufactured by Yokogawa Electric Corporation include Network-I/O Distributed Control Node (N-IO DCN).

### 1.2. Background

Techniques proposed by the present disclosure relate to a simulation function of an I/O connection device compatible with a network, the I/O connection device being in a process control system using the I/O connection device.

The process control system controls various state quantities (for example, pressure, temperature, and flow rate) in an industrial process at a plant. High-level automatic operation is thereby implemented.

A conventional process control system is configured with a specialized controller at the center of the system, the specialized controller being unique to a vendor. The specialized controller acquires state quantities that are I/O input values from plural sensors (for example, a flowmeter and a thermometer) via an input/output module (IOM). Subsequently, the specialized controller finds an operation quantity for an actuator (for example, a valve) according to the state quantities. The specialized controller manipulates the actuator by providing an I/O output value according to the manipulation quantity to the actuator via the IOM. The above described various state quantities are controlled by these functions of the specialized controller.

A simulation function exists for debug of control logic of this specialized controller and for operation tests through hardware, such as the sensors and the actuator. The simulation function includes the above mentioned I/O disconnection function and softwiring function. These functions allow the specialized controller to check operation in a situation where hardware is incomplete.

However, more process control systems are becoming open in recent years. An open process control system includes, for example, a general purpose controller and a distributed control node (DCN). In place of a specialized controller, a general purpose controller is, for example, a device having a standard control function (for example, a control function compliant with IEC 61131-3) implemented on a general purpose device, such as a personal computer (PC) or a workstation. The general purpose controller and the DCN are connected via, for example, an open network (for example, OPC-UA).

Making a process control system open enables the cost for introducing the system to be kept low. Furthermore, making the process control system open enables construction of a system environment where digital transformation techniques are easily incorporated in. Therefore, users of process control systems are working with system vendors to implement a multivendor environment having a control function and an IOM connected via an open network (for example, the Open Process Automation Forum (reference URL: https://www.productivity.be/en/page.php?r=O-PAS)).

For a process control system in a multivendor environment, there is a demand for an I/O connection device compatible with a network to be compatible with I/O input and output to and from plural general purpose controllers. Furthermore, there is a demand for a simulation function of the I/O connection device compatible with the network to be in a state where the simulation function is connectable to the network.

### 1.3. Process Control System Using Specialized Controller

### 1.3.1. Example of Configuration of Process Control System

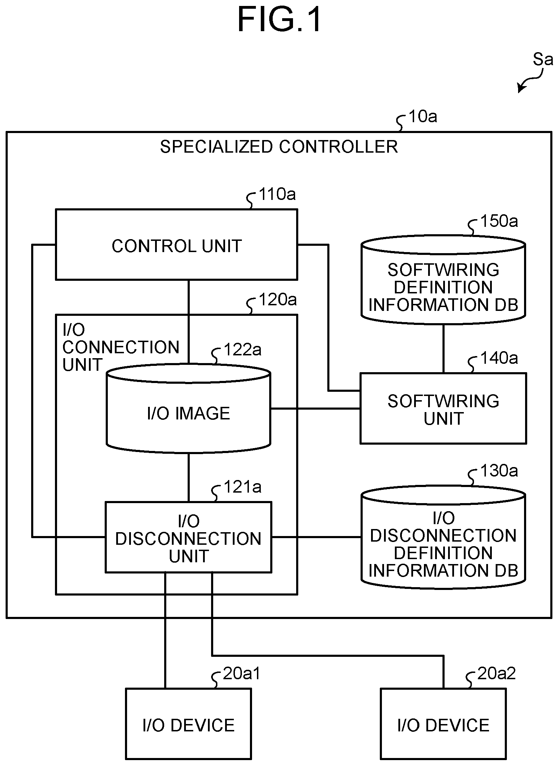

An example of a simulation function using a specialized controller will be described first. FIG. 1 is a diagram illustrating an example of a functional configuration of a process control system Sa using a specialized controller.

The process control system Sa includes a specialized controller 10a and I/O devices 20a1 and 20a2. The I/O devices 20a1 and 20a2 may be simply referred to as I/O devices 20a when they are not distinguished from each other. Furthermore, FIG. 1 illustrates the two I/O devices 20a1 and 20a2, but the number of I/O devices 20a may be one or three or more without being limited to one.

### Specialized Controller 10a

The specialized controller 10a includes a control unit 1 10a, an I/O connection unit 120a, an I/O disconnection definition information database (DB) 130a, a softwiring unit 140a, and a softwiring definition information DB 150a. The I/O connection unit 120a includes an I/O disconnection unit 121a and an I/O image 122a.

### Control Unit 110a

The control unit 110a outputs a refresh request to the I/O disconnection unit 121a in the I/O connection unit 120a. The control unit 110a outputs a wiring execution request to the softwiring unit 140a.

The control unit 110a reads I/O input information from the I/O image 122a. On the basis of the I/O input information read, the control unit 110a executes a control function. The control unit 110a writes I/O output information as a result of execution of the control function, into the I/O image 122a, and outputs a flush request to the I/O disconnection unit 121a.

The control unit 110a executes the above described operation with a regular period (hereinafter, also referred to as an I/O access period).

### I/O Connection Unit 120a

As described above, the I/O connection unit 120a includes the I/O disconnection unit 121a and the I/O image 122a.

### I/O Image 122a

The I/O image 122a is a database holding I/O input information (hereinafter, also simply referred to as input information) read from the I/O devices 20a and I/O output information (hereinafter, also simply referred to as output information) output by the control unit 110a.

### I/O Disconnection Unit 121a

The I/O disconnection unit 121a has an I/O disconnection function and mediates between the I/O image 122a and the I/O devices 20a. The I/O disconnection unit 121a operates according to a refresh request and a flush request from the control unit 110a.

### I/O Disconnection Definition Information DB 130a

The I/O disconnection definition information DB 130a is a database holding I/O definition information. The I/O definition information is information used for operation of the I/O disconnection unit 121a.

The I/O definition information is arranged in a memory area (the I/O disconnection definition information DB 130a) that is able to be referred to by each unit of the specialized controller 10a before the I/O disconnection unit 121a operates. The I/O definition information may be dynamically changed even if each unit of the specialized controller 10a is operating. The I/O definition information includes information indicating whether or not each I/O input and output data point is an I/O disconnection target. The I/O input and output data points are connection points between the I/O devices 20a and the specialized controller 10a. One I/O device 20a and one specialized controller 10a may be connected to each other at plural connection points (I/O input and output data points).

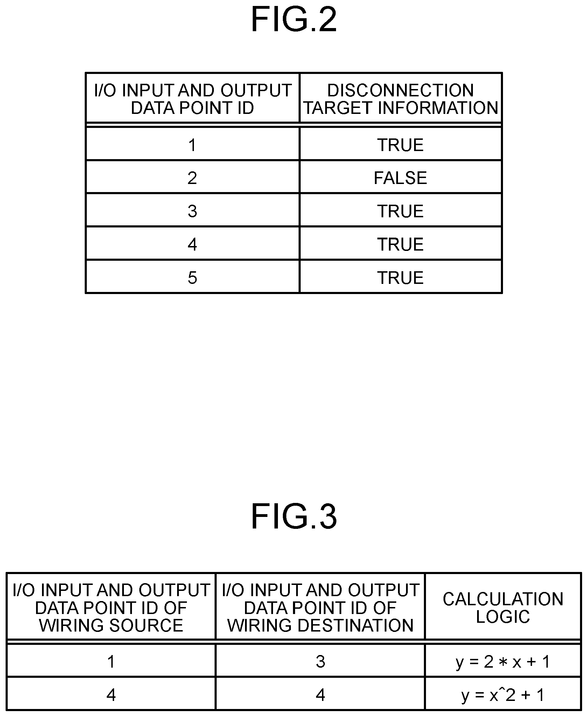

FIG. 2 is a table illustrating an example of the I/O definition information. As illustrated in FIG. 2, the I/O definition information includes I/O input and output data point IDs identifying the I/O input and output data points and disconnection target information indicating whether the I/O input and output data points identified by the I/O input and output data point IDs are I/O disconnection targets.

In the example of FIG. 2, the I/O input and output data points having the I/O input and output data point IDs, "1", "3", "4", and "5", are disconnection targets ("TRUE"). On the contrary, the I/O input and output data point having the I/O input and output data point ID, "2", is not a disconnection target ("FALSE").

### Softwiring Unit 140a

The softwiring unit 140a illustrated in FIG. 1 executes a softwiring function for input information and output information held in the I/O image 122a. Upon receipt of a wiring execution request from the control unit 110a, the softwiring unit 140a executes softwiring operation.

### Softwiring Definition Information DB 150a

The softwiring definition information DB 150a is a database holding softwiring definition information. The softwiring definition information is information used for operation of the softwiring unit 140a.

The softwiring definition information is arranged in a memory area (the softwiring definition information DB 150a) that is able to be referred to by each unit of the specialized controller 10a before the softwiring unit 140a operates. The softwiring definition information may be dynamically changed even if each unit of the specialized controller 10a is operating.

The softwiring definition information includes information related to an I/O input and output data point of a wiring source, information related to an I/O input and output data point of a wiring destination, and information related to calculation logic.

FIG. 3 is a table illustrating an example of the softwiring definition information. As illustrated in FIG. 3, the softwiring definition information includes I/O input and output data point IDs of wiring sources, the I/O input and output data point IDs identifying I/O input and output data points of the wiring sources. Furthermore, the softwiring definition information includes I/O input and output data point IDs of wiring destinations, the I/O input and output data point IDs identifying I/O input and output data points of the wiring destinations. The softwiring definition information includes calculation logic corresponding to each combination of I/O input and output data point IDs of a wiring source and a wiring destination.

In the example of FIG. 3, the calculation logic in a case where the I/O input and output data point ID of the wiring source is "1" and the I/O input and output data point ID of the wiring destination is "3" is y = 2*x + 1. Furthermore, the calculation logic in a case where the I/O input and output data point ID of the wiring source is "4" and the I/O input and output data point ID of the wiring destination is "4" is y = x^2 + 1. Herein, x is the I/O input and output value of the wiring source. Furthermore, y is the I/O input and output value of the wiring destination.

### I/O Device 20a

The I/O devices 20a illustrated in FIG. 1 are, for example, a measurement device, such as a sensor, and an operated device, such as an actuator or a valve.

### 1.3.2. Example of Operation of Process Control System

### Control Process

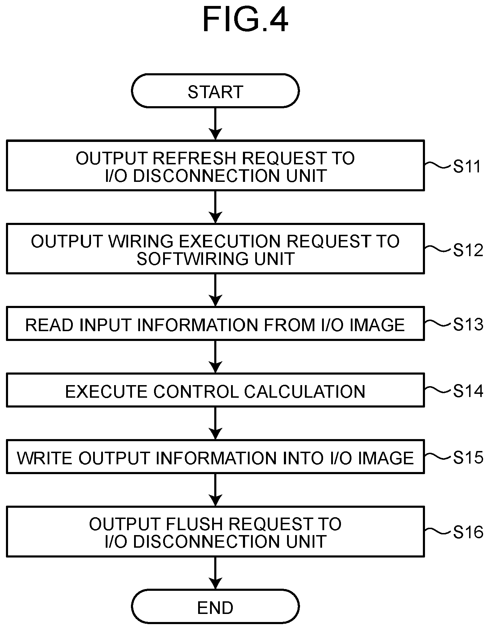

FIG. 4 is a flowchart illustrating an example of a flow of a control process. The control process illustrated in FIG. 4 is, for example, executed by the control unit 110a with an I/O access period.

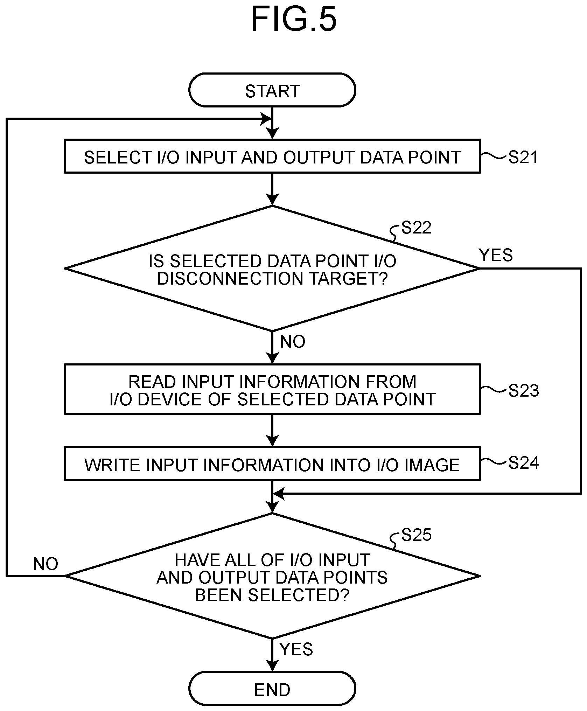

As illustrated in FIG. 4, the control unit 110a outputs a refresh request to the I/O disconnection unit 121a (Step S11). Upon receipt of this refresh request, the I/O disconnection unit 121a executes a refresh process (see FIG. 5).

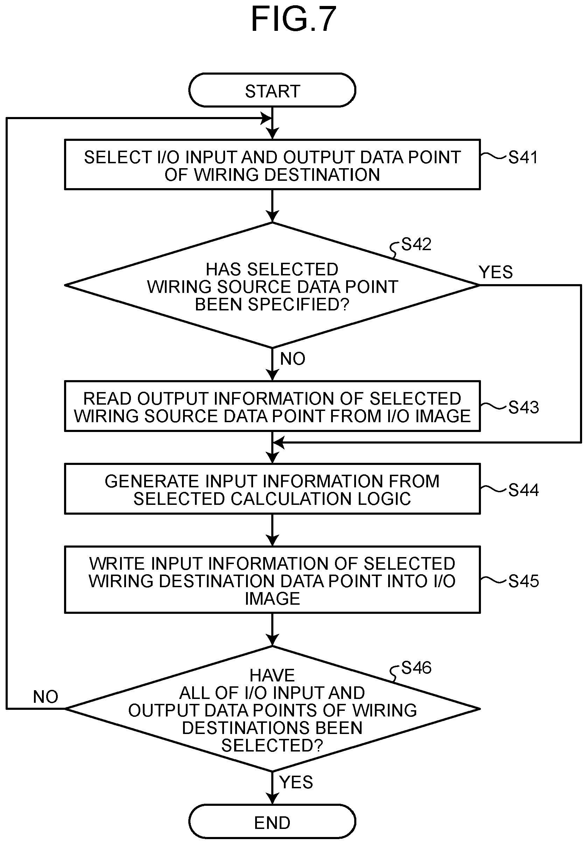

Thereafter, the control unit 110a outputs a wiring execution request to the softwiring unit 140a (Step S12). Upon receipt of this wiring execution request, the softwiring unit 140a executes the wiring execution process (see FIG. 7).

The control unit 110a reads input information from the I/O image 122a (Step S13). Subsequently, the control unit 110a executes control calculation by using the input information read (Step S14). On the basis of a result of the control calculation, the control unit 110a writes output information into the I/O image 122a (Step S15).

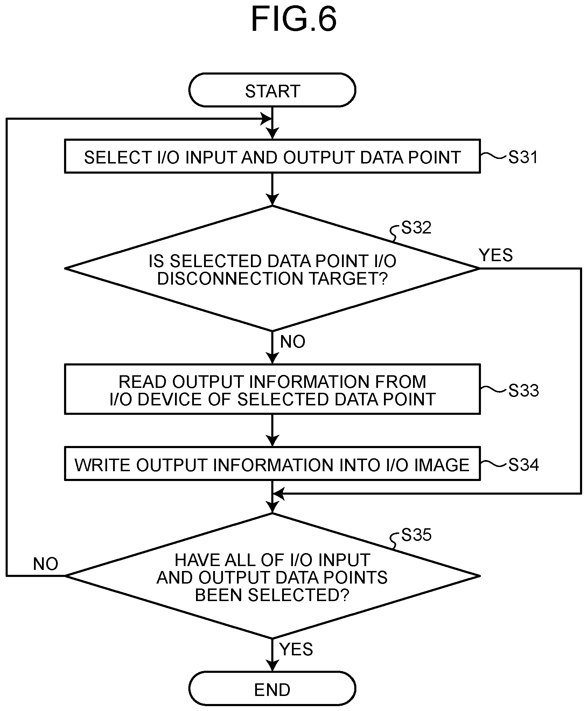

The control unit 110a outputs a flush request to the I/O disconnection unit 121a (Step S16) and ends the process. Upon receipt of this flush request, the I/O disconnection unit 121a executes a flush process (see FIG. 6).

### Refresh Process

FIG. 5 is a flowchart illustrating an example of a flow of the refresh process. The refresh process illustrated in FIG. 5 is executes by the I/O disconnection unit 121a when the refresh request is received from the control unit 110a.

The I/O disconnection unit 121a selects one I/O input and output data point from all of input and output data points that the I/O devices 20a connected to the specialized controller 10a have (Step S21). The I/O input and output data point selected by the I/O disconnection unit 121a will hereinafter be also referred to as a selected data point.

The I/O disconnection unit 121a determines whether or not the selected data point is an I/O disconnection target (Step S22). For example, the I/O disconnection unit 121a refers to the I/O disconnection definition information DB 130a and acquires disconnection target information on an I/O input and output data point ID that identifies the selected data point. On the basis of the disconnection target information acquired, the I/O disconnection unit 121a determines whether or not the selected data point is an I/O disconnection target.

In a case where the selected data point is an I/O disconnection target, that is, in a case where the disconnection target information on the selected data point is "TRUE" (Step S22; Yes), the I/O disconnection unit 121a proceeds to Step S25.

On the contrary, in a case where the selected data point is not an I/O disconnection target, that is, in a case where the disconnection target information on the selected data point is "FALSE" (Step S22; No), the I/O disconnection unit 121a reads input information from the I/O device 20a of the selected data point (Step S23).

Subsequently, the I/O disconnection unit 121a writes the input information read, into the I/O image 122a (Step S24).

The I/O disconnection unit 121a determines whether or not all of the I/O input and output data points of all of the I/O devices 20a have been selected (Step S25).

In a case where not all of the I/O input and output data points have been selected (Step S25; No), the I/O disconnection unit 121a returns to Step S21. On the contrary, in a case where all of the I/O input and output data points have been selected (Step S25; Yes), the I/O disconnection unit 121a ends the process.

### Flush Process

FIG. 6 is a flowchart illustrating an example of a flow of a flush process. The flush process illustrated in FIG. 6 is executes by the I/O disconnection unit 121a when a flush request is received from the control unit 110a.

The I/O disconnection unit 121a selects one I/O input and output data point from all of I/O input and output data points that the I/O devices 20a connected to the specialized controller 10a have (Step S31). The I/O input and output data point selected by the I/O disconnection unit 121a will hereinafter be also referred to as a selected data point.

The I/O disconnection unit 121a determines whether or not the selected data point is an I/O disconnection target (Step S32). For example, the I/O disconnection unit 121a refers to the I/O disconnection definition information DB 130a and acquires disconnection target information on an I/O input and output data point ID that identifies the selected data point. On the basis of the disconnection target information acquired, the I/O disconnection unit 121a determines whether or not the selected data point is an I/O disconnection target.

In a case where the selected data point is an I/O disconnection target, that is, in a case where the disconnection target information on the selected data point is "TRUE" (Step S32; Yes), the I/O disconnection unit 121a proceeds to Step S35.

On the contrary, in a case where the selected data point is not an I/O disconnection target, that is, in a case where the disconnection target information on the selected data point is "FALSE" (Step S32; No), the I/O disconnection unit 121a reads output information from the I/O device 20a of the selected data point (Step S33).

Subsequently, the I/O disconnection unit 121a writes the output information read, into the I/O image 122a (Step S34).

The I/O disconnection unit 121a determines whether or not all of the I/O input and output data points of all of the I/O devices 20a have been selected (Step S35).

In a case where not all of the I/O input and output data points have been selected (Step S35; No), the I/O disconnection unit 121a returns to Step S31. On the contrary, in a case where all of the I/O input and output data points have been selected (Step S35; Yes), the I/O disconnection unit 121a ends the process.

### Wiring Execution Process

FIG. 7 is a flowchart illustrating an example of a flow of a wiring execution process. The wiring execution process illustrated in FIG. 7 is executed by the softwiring unit 140a when a wiring execution request from the control unit 110a is received.

As illustrated in FIG. 7, the softwiring unit 140a selects an I/O input and output data point of a wiring destination (Step S41). For example, the softwiring unit 140a selects one of I/O input and output data point IDs of wiring destinations held in the softwiring definition information DB 150a. The I/O input and output data point of the wiring destination selected by the softwiring unit 140a will hereinafter be also referred to as a selected wiring destination data point.

The softwiring unit 140a determines whether or not a selected wiring source data point has been specified (Step S42). The selected wiring source data point is an I/O input and output data point of a wiring source, the I/O input and output data point corresponding to the selected wiring destination data point in the softwiring definition information. For example, the softwiring unit 140a refers to the softwiring definition information DB 150a and determines whether or not the softwiring definition information DB 150a includes an I/O input and output data point ID of a wiring source corresponding to the selected wiring destination data point.

In a case where a selected wiring source data point has not been specified (Step S42; No), the softwiring unit 140a proceeds to Step S44. That is, in a case where an I/O input and output data point ID of a wiring source corresponding to the selected wiring destination data point is not included in the softwiring definition information, the softwiring unit 140a proceeds to Step S44.

In a case where a selected wiring source data point has been specified (Step S42; Yes), the softwiring unit 140a reads output information of the selected wiring source data point from the I/O image 122a (Step S43). That is, in a case where the I/O input and output data point ID of the wiring source corresponding to the selected wiring destination data point is included in the softwiring definition information, the softwiring unit 140a reads output information of the selected wiring source data point from the I/O image 122a.

The softwiring unit 140a generates input information from selected calculation logic (Step S44). The selected calculation logic is calculation logic corresponding to the selected wiring destination data point in the softwiring definition information.

The softwiring unit 140a writes the input information from the selected wiring destination data point into the I/O image 122a (Step S45). The input information from the selected wiring destination data point is input information generated using the selected calculation logic at Step S44.

The softwiring unit 140a determines whether or not all of the I/O input and output data points of the wiring destinations have been selected (Step S46).

In a case where not all of the I/O input and output data points of the wiring destinations have been selected (Step S46; No), the softwiring unit 140a returns to Step S41. On the contrary, in a case where all of the I/O input and output data points of the wiring destinations have been selected (Step S46; Yes), the softwiring unit 140a ends the process.

### Overall Process

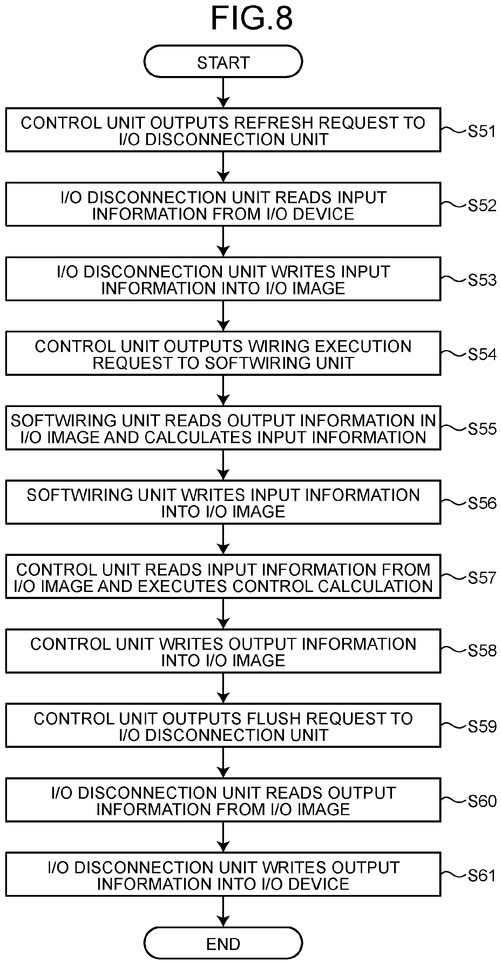

An example of the overall process executed in the process control system Sa will be described next. FIG. 8 is a flowchart illustrating an example of a flow of the overall process. The overall process in FIG. 8 is, for example, periodically executed by the process control system Sa.

The control unit 110a of the process control system Sa outputs a refresh request to the I/O disconnection unit 121a (Step S51).

The I/O disconnection unit 121a reads input information from the I/O device 20a (Step S52). The I/O disconnection unit 121a writes the read input information into the I/O image 122a (Step S53).

The control unit 110a outputs a wiring execution request to the softwiring unit 140a (Step S54).

The softwiring unit 140a reads output information in the I/O image 122a and executes calculation logic to calculate input information (Step S55). The softwiring unit 140a writes the input information into the I/O image 122a (Step S56).

The control unit 110a reads the input information from the I/O image 122a and executes control calculation (Step S57). The control unit 110a writes output information into the I/O image 122a (Step S58). The control unit 110a outputs a flush request to the I/O disconnection unit 121a (Step S59).

The I/O disconnection unit 121a reads the output information from the I/O image 122a (Step S60). The I/O disconnection unit 121a writes the output information into the I/O device 20a (Step S61).

### 1.4. Problems

As described above, an operations test of a control function is performed using a simulation function of the specialized controller 10a. In a case where a process control system is made open, there is also a demand for an equivalent simulation function.

For example, when a process control system is made open, devices (also respectively referred to as a control device, an I/O connection device, and an information processing device) respectively corresponding the above described control unit 110a, I/O connection unit 120a, and softwiring unit 140a may be connected in an open network.

The I/O connection device compatible with the network may receive a request for access to input information and output information (hereinafter, also referred to as input and output information) from plural control functions (control devices) existing in the network. The following problems exist, for example, in this case.

### First Problem

There is a demand for a simulation function in a process control system that has been made open (for example, an I/O connection device) to be compatible with both a simulation function of a general purpose controller and a control function of an actual general purpose controller (actual equipment).

That is, there is a demand for a simulation function of a process control system that has been made open to be able to start an operation test of the process control system even in a case where some of actual equipment, such as an I/O connection device and a general purpose controller, has/have not been prepared.

### Second Problem

There is a demand for a simulation function of a process control system that has been made open (for example, an I/O connection device) to disclose input and output information in a general purpose network. Disclosing the input and output information prevents inconsistency from being generated upon access to the simulation function of the I/O connection device compatible with the network by plural general purpose controllers or human machine interfaces (HMIs), for example. Furthermore, the plural general purpose controllers or HMIs are able to access the simulation function without knowing (being aware of) whether the I/O connection device is a simulation function or actual equipment.

### 1.5. Outline of Proposed Techniques

A process control system according to techniques proposed by the present disclosure includes an I/O connection device compatible with a network, a control device, and an information processing device.

The control device includes a communication unit, an acquisition unit, and an execution unit. The communication unit performs, via the network, communication with the I/O connection device where an I/O device is connected, and the information processing device. The acquisition unit acquires device information from at least one of a first I/O image (an example of a first storage unit) and a second I/O image (an example of a second storage unit). The I/O connection device has the first I/O image and the first I/O image stores device information related to the I/O device. The information processing device has the second I/O image and the second I/O image stores the device information. The execution unit executes control calculation related to the I/O device using the device information.

The control device accesses, in addition to the first storage unit that the I/O connection device has, the second storage unit that the information processing device has, to acquire the device information. Even in a case where part of actual equipment of the I/O connection device has not been prepared, the control device is thereby able to start an operation test of the process control system.

Furthermore, without being limited to actual equipment, the control device may be a control device having a simulation function. As described above, even if the control device is a control device having a simulation function, that is, even in a case where part of actual equipment of the control device has not been prepared, the process control system is able to start an operation test.

Furthermore, the device information (for example, input and output information) related to the I/O device is held in the I/O connection device and the information processing device that are connected to the control device via the network. Therefore, the control device according to the techniques proposed herein is able to access the device information disclosed in the network.

As described above, even if the control device is connected to the I/O connection device and the information processing device via the network, that is, even if the process control system is made open, the control device according to the techniques proposed herein is able to implement the simulation function.

### 2. Example of Configuration of Process Control System

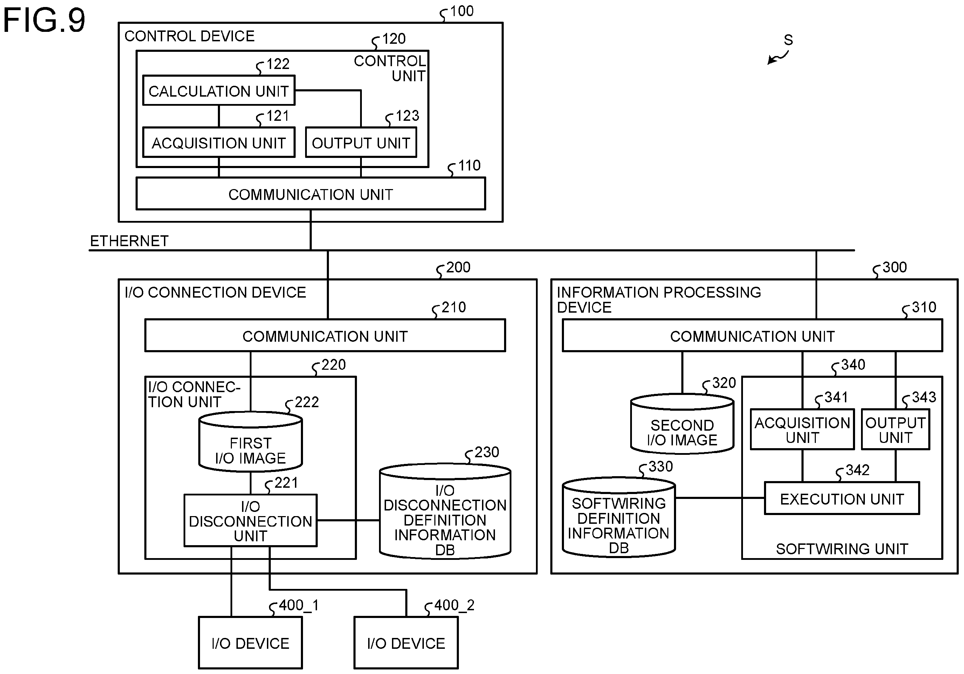

FIG. 9 is a block diagram illustrating an example of a configuration of a process control system S according to an embodiment of the present disclosure. The process control system S in FIG. 9 includes a control device 100, an I/O connection device 200, an information processing device 300, and I/O devices 400_1 and 400_2.

In a case where the I/O devices 400_1 and 400_2 are not distinguished from each other, they will simply be referred to as I/O devices 400. Furthermore, FIG. 9 illustrates the two I/O devices 400_1 and 400_2, but the number of the I/O devices 400 may be one or three or more, without being limited to two.

The control device 100, the I/O connection device 200, and the information processing device 300 are connected to one another via a network. FIG. 9 illustrates ETHERNET (registered trademark) as an example of the network, but the network is not limited to ETHERNET. The network may be any general purpose network and may be a wide area network (WAN) or a local area network (LAN) other than ETHERNET.

Furthermore, FIG. 9 illustrates one control device 100, one I/O connection device 200, and one information processing device 300, but the numbers of these devices may each be two or more without being limited to one. Furthermore, the I/O connection device 200 may be not connected to the network. That is, when a simulation is made in the process control system S, the I/O connection device 200 may be not included in the process control system S. Furthermore, the control device 100 may be not actual equipment and may be a device having a simulation function.

Furthermore, FIG. 9 illustrates only components needed for description of the embodiment by functional blocks and not components that are common.

### Control Device 100

The control device 100 illustrated in FIG. 9 is a general purpose controller, such as a PC or a workstation. The control device 100 includes a communication unit 110 and a control unit 120.

### Communication Unit 110

The communication unit 110 is a processing unit that controls communication with the I/O connection device 200, the information processing device 300, and any other device. The communication unit 110 has a general purpose network communication function enabling I/O input and output of, for example, OPC-UA. The communication unit 110 is implemented by, for example, a communication interface.

### Control Unit 120

The control unit 120 is a processing unit that controls the whole control device 100. The control unit 120 has a control function to control a state quantity of an industrial process. The control unit 120 is implemented by, for example, a processor. The control unit 120 includes an acquisition unit 121, a calculation unit 122, and an output unit 123. The control unit 120 corresponds to a so-called processor. The control unit 120 is implemented by, for example, a central processing unit (CPU) or a micro processing unit (MPU).

By reading a program stored in a storage unit (not illustrated in the drawings) and executing the program with a RAM serving as a work area, the control unit 120 implements functions of the acquisition unit 121, the calculation unit 122, and the output unit 123. The control unit 120 may be implemented by an integrated circuit, such as an application specific integrated circuit (ASIC) or a field programmable gate array (FPGA).

### Acquisition Unit 121

The acquisition unit 121 acquires input information (an example of device information) from at least one of the I/O connection device 200 and the information processing device 300. The acquisition unit 121 outputs the input information acquired, to the calculation unit 122. As described above, the acquisition unit 121 acquires the input information (I/O input information) from the I/O devices 400 without distinguishing the I/O connection device 200 and the information processing device 300 from each other.

### Calculation Unit 122

The calculation unit 122 executes control calculation on the basis of the input information acquired by the acquisition unit 121. The calculation unit 122 outputs a result of execution of the control calculation to the output unit 123.

### Output Unit 123

The output unit 123 outputs output information that is the result of the calculation by the calculation unit 122 to at least one of the I/O connection device 200 and the information processing device 300. As described above, the output unit 123 outputs the output information (I/O output information) to the I/O devices 400 without distinguishing the I/O connection device 200 and the information processing device 300 from each other.

### I/O Connection Device 200

The I/O connection device 200 illustrated in FIG. 9 has an I/O connection function to connect to the control unit 120 of the general purpose control device 100 via the network. The I/O connection device 200 illustrated in FIG. 9 includes a communication unit 210, an I/O connection unit 220, and an I/O disconnection definition information DB 230.

### Communication Unit 210

The communication unit 210 is a processing unit that controls communication with the control device 100, the information processing device 300, and any other device. The communication unit 210 receives an I/O input and output request of OPC-UA, for example. The communication unit 210 is implemented by, for example, a communication interface.

### I/O Connection Unit 220

The I/O connection unit 220 has a function to manage input and output values (input and output information) from and to the I/O devices 400. Input information (an input value) is information (a value) input to the control device 100 and output information (an output value) is information (a value) output from the control device 100. The output information is information input to the I/O devices 400 and the input information is information output from the I/O devices 400.

The I/O connection unit 220 includes an I/O disconnection unit 221 and a first I/O image 222.

### I/O Disconnection Unit 221

The I/O disconnection unit 221 has a function to partly disconnect or connect the I/O devices 400 in software. The I/O disconnection unit 221 mediates between the first I/O image 222 and the I/O devices 400.

The I/O disconnection unit 221 in FIG. 9 operates with a regular period (an access period). The I/O disconnection unit 221 in FIG. 9 operates asynchronously with the control unit 120 of the control device 100 and a softwiring unit 340 described later.

### First I/O Image 222

The first I/O image 222 is a database that holds input information read from the I/O devices 400 and output information output by the control device 100. The first I/O image 222 illustrated in FIG. 9 holds input and output information from and to the I/O devices 400_1 and 400_2 connected in hardware (actually) to the I/O connection device 200.

### I/O Disconnection Definition Information DB 230

The I/O disconnection definition information DB 230 is a database that holds I/O definition information. The I/O definition information is information used for operation of the I/O disconnection unit 221.

The I/O definition information is arranged in a memory area (the I/O disconnection definition information DB 230) that is able to be referred to by each unit of the control device 100 before the I/O disconnection unit 221 operates. The I/O definition information may be dynamically changed even if each unit of the control device 100 is operating.

The I/O definition information includes information indicating whether or not each I/O input and output data point is an I/O disconnection target. The I/O input and output data points are connection points between the I/O devices 400 and the I/O connection device 200. One I/O device 400 and one I/O connection device 200 may be connected to each other at plural connection points (I/O input and output data points). The I/O definition information is, for example, the same as the I/O definition information (see FIG. 2) held in the I/O disconnection definition information DB 130a in the specialized controller 10a.

### Information Processing Device 300

The information processing device 300 illustrated in FIG. 9 is a general purpose device, such as a PC or a workstation. The information processing device 300 is, for example, an engineering PC having an engineering function. The information processing device 300 has a softwiring function.

The information processing device 300 illustrated in FIG. 9 includes a communication unit 310, a second I/O image 320, a softwiring definition information DB 330, and the softwiring unit 340.

### Communication Unit 310

The communication unit 310 is a processing unit that controls communication with the control device 100, the information processing device 300, and any other device. The communication unit 310 is implemented by, for example, a communication interface.

The communication unit 310 in FIG. 9 performs communication with the second I/O image 320 according to a request from the softwiring unit 340. The communication unit 310 exchanges input and output information with the second I/O image 320. The communication unit 310 outputs input and output information in the second I/O image 320 to the control device 100 or the softwiring unit 340. Furthermore, the communication unit 310 outputs input and output information received from the control device 100 or the softwiring unit 340 to the second I/O image 320.

### Second I/O Image 320

The second I/O image 320 is an I/O image provided for simulation by the I/O connection device 200 compatible with the network. The second I/O image 320 has a configuration and a function that are equivalent to the first I/O image 222 in the I/O connection device 200.

However, the second I/O image 320 is different from the first I/O image 222 in that the second I/O image 320 stays disconnected from the I/O devices 400 for all of input and output data points.

That is, the second I/O image 320 is a database simulating the first I/O image 222 in the I/O connection device 200 (not illustrated in the drawings) that has not been connected to the network. When this I/O connection device 200 is connected to the network, input and output information corresponding to input and output information held in the first I/O image 222 in the connected I/O connection device 200 is deleted from the second I/O image 320.

When all of I/O connection devices 200 have been connected to the network, all of input and output information held in the second I/O image 320 is deleted or the second I/O image 320 is deleted.

### Softwiring Definition Information DB 330

The softwiring definition information DB 330 is a database that holds network device ID information and softwiring definition information.

### Network Device ID Information

The network device ID information includes, for example, identification information identifying the I/O connection device 200 corresponding to an I/O input and output data point of a wiring source or a wiring destination included in the softwiring definition information.

Furthermore, the network device ID information may include identification information identifying, in addition to the I/O connection device 200 connected to the network, the I/O connection device 200 that has not been connected to the network.

The identification information identifying the I/O connection device 200 that has not been connected to the network can also be said to be information identifying the second I/O image 320 simulating the first I/O image 222 in the I/O connection device 200 that has not been connected to the network.

In other words, the network device ID information includes identification information identifying the first I/O image 222 in the I/O connection device 200 and the second I/O image 320.

The network device ID information is information used for operation of the softwiring unit 340. The network device ID information is arranged in a memory area (the softwiring definition information DB 330) that is able to be referred to by each unit of the information processing device 300 before the softwiring unit 340 operates. The network device ID information may be dynamically changed even if each unit of the information processing device 300 is operating.

The network device ID information includes the identification information (a network device ID) that identifies the I/O connection device 200 and an access period. The access period is information defining the minimum time period in which the softwiring unit 340 accesses the I/O connection device 200. The softwiring unit 340 accesses the I/O connection device 200 and the second I/O image 320 according to this access period and acquires input and output information. Furthermore, the access period is a period, with which the I/O connection device 200 executes a refresh process and a flush process.

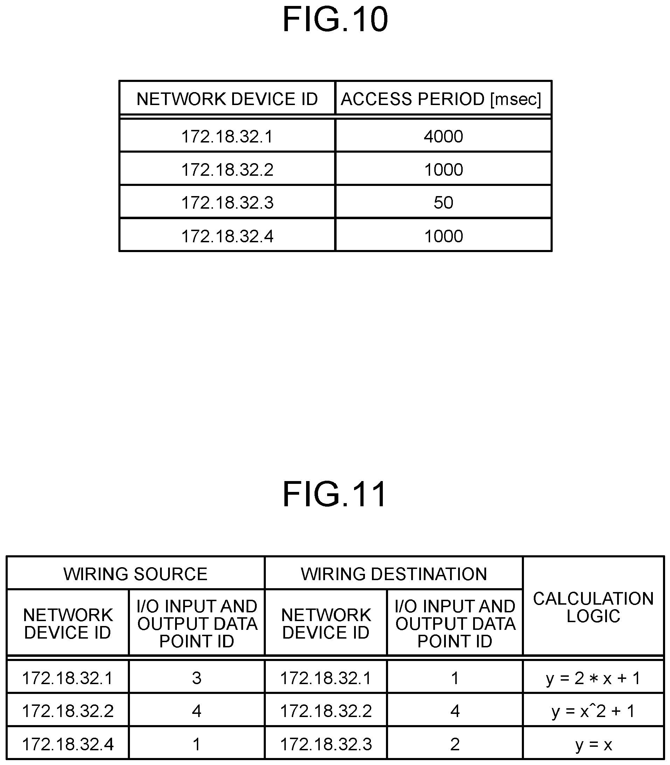

FIG. 10 is a table illustrating an example of the network device ID information according to the embodiment of the present disclosure. As illustrated in FIG. 10, the network device ID information includes network device IDs and access periods.

In the example of FIG. 10, for the network device ID, "172.18.32.1", the access period is "4000 (msec)". For the network device ID, "172.18.32.2", the access period is "1000 (msec)".

The network device IDs illustrated in FIG. 10 are just an example. The network device IDs may each be any information that identifies the I/O connection device 200 (or the information processing device 300) corresponding to an I/O input and output data point of a wiring source or a wiring destination and may each be an IP address, a host name, or a domain name.

### Softwiring Definition Information

The softwiring definition information is arranged in a memory area (the softwiring definition information DB 330) that is able to be referred to by each unit of the control device 100 before the softwiring unit 340 operates. The softwiring definition information may be dynamically changed even if each unit of the control device 100 is operating.

FIG. 11 is a table illustrating an example of the softwiring definition information according to the embodiment of the present disclosure.

The softwiring definition information includes information related to I/O input and output data points of wiring sources and network device IDs of the wiring sources, information related to I/O input and output data points of wiring destinations and network device IDs of the wiring destinations, and information related to calculation logic.

The information related to the I/O input and output data points of the wiring sources includes I/O input and output data point IDs that identify the I/O input and output data points of the wiring sources. Furthermore, the network device IDs of the wiring sources are information that identifies the I/O connection device or devices 200 having the I/O input and output data points identified by the I/O input and output data point IDs of the wiring sources.

In a case where the I/O connection device 200 has not been connected to the network, the network device ID of a wiring source may be information that identifies the second I/O image 320 (or the information processing device 300).

The information related to the I/O input and output data points of the wiring destinations includes I/O input and output data point IDs that identify the I/O input and output data points of the wiring destinations. Furthermore, the network device IDs of the wiring destinations are information that identifies the I/O connection device or devices 200 having the I/O input and output data points identified by the I/O input and output data point IDs of the wiring destinations.

In a case where the I/O connection device 200 has not been connected to the network, the network device ID of a wiring destination may be information that identifies the second I/O image 320 (or the information processing device 300).

The calculation logic is information indicating an I/O input and output value (input and output information) at an I/O input and output data point of a wiring destination, the I/O input and output value corresponding to an I/O input and output value (input and output information) at an I/O input and output data point of a wiring source. The calculation logic is used in execution of the calculation logic at the softwiring unit 340.

In the example of FIG. 11, in a case where the network device ID is "172.18.32.1" and the I/O input and output data point ID is "3" for a wiring source, and the network device ID is "172.18.32.1" and the I/O input and output data point ID is "1" for the wiring destination, the calculation logic is y = 2*x + 1.

Furthermore, in a case where the network device ID is "172.18.32.4" and the I/O input and output data point ID is "1" for a wiring source and the network device ID is "172.18.32.3" and the I/O input and output data point ID is "3" for the wiring destination, the calculation logic is y = x. Herein, x is the I/O input and output value of a wiring source. Furthermore, y is the I/O input and output value of the wiring destination.

The softwiring definition information has, as a composite primary key, the network device ID and the I/O input and output data point ID of a wiring destination.

### Softwiring Unit 340

The softwiring unit 340 illustrated in FIG. 9 executes the softwiring function for input information and output information held in the first and second I/O images 222 and 320. The softwiring unit 340 periodically executes the softwiring function.

The softwiring unit 340 determines a wiring source or a wiring destination, on the basis of a network device ID and an I/O input and output data point ID.

An execution period for wiring calculation by the softwiring unit 340 is, for example, the access period corresponding to the network device ID of a wiring destination. Therefore, the execution period (regular period) of the softwiring function in FIG. 9 is to be equal to or less than the access period for each network device ID.

That is, the execution period of the softwiring function is equal to or less than the shortest access period (for example, 50 msec in the example of FIG. 10) of the access periods for the respective network device IDs.

The softwiring unit 340 illustrated in FIG. 9 has an acquisition unit 341, an execution unit 342, and an output unit 343.

### Acquisition Unit 341

The acquisition unit 341 acquires input and output information (an example of device information) from at least one of the first I/O image 222 in the I/O connection device 200 and the second I/O image 320. For example, the acquisition unit 341 refers to the softwiring definition information DB 330 and acquires input and output information of an I/O input and output data point of a wiring source.

The acquisition unit 341 outputs the input and output information acquired, to the execution unit 342. As described above, the acquisition unit 341 acquires input and output information (I/O input and output information) of the I/O devices 400 without distinguishing the first and second I/O images 222 and 320 from each other.

### Execution Unit 342

The execution unit 342 executes calculation logic, on the basis of the input and output information acquired by the acquisition unit 341. For example, the execution unit 342 refers to the softwiring definition information DB 330 and executes calculation logic corresponding to the I/O input and output data point of the wiring source. The execution unit 342 outputs a result of execution of the calculation logic to the output unit 343.

### Output Unit 343

The output unit 343 outputs input and output information that is the result of execution by the execution unit 342 to at least one of the first I/O image 222 in the I/O connection device 200 and the second I/O image 320. For example, the output unit 343 refers to the softwiring definition information DB 330 and outputs input and output information by specifying the I/O input and output data point of the wiring destination corresponding to the I/O input and output data point of the wiring source.

The output unit 343 outputs the input and output information (I/O input and output information) of the input and output data point of the wiring destination without distinguishing the first I/O image 222 in the I/O connection device 200 and the second I/O image 320 from each other.

### 3. Example of Process by Process Control System

### 3.1. Example of Control Process

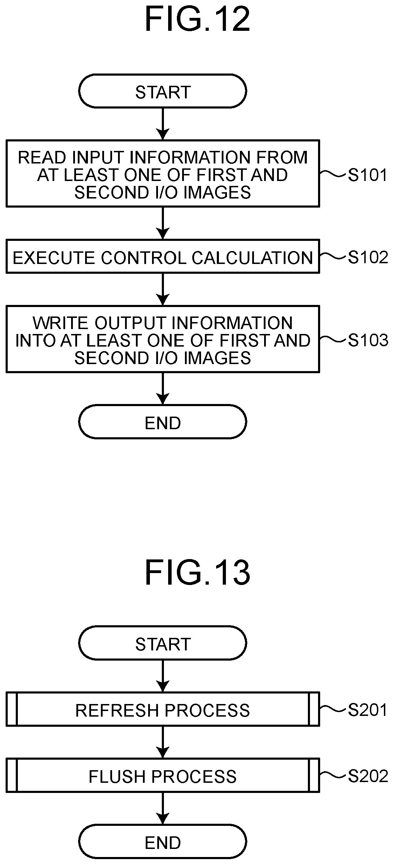

FIG. 12 is a flowchart illustrating an example of a flow of a control process according to the embodiment of the present disclosure. The control process in FIG. 12 is executed by the control device 100 with a first period.

As illustrated in FIG. 12, the control device 100 reads input information from at least one of the first and second I/O images 222 and 320 (Step S101).

The control device 100 executes control calculation by using the input information read (Step S102). The control device 100 writes output information that is a result of the calculation, into at least one of the first and second I/O images 222 and 320 (Step S103).

As described above, in the control process of FIG. 12, the control device 100 does not transmit a refresh request or a flush request to the I/O connection device 200 and does not transmit a softwiring execution request to the softwiring unit 340. The control device 100 operates without synchronizing (asynchronously) with the I/O connection device 200 and the information processing device 300.

### 3.2. Example of Update Process

FIG. 13 is a flowchart illustrating an example of a flow of an update process according to the embodiment of the present disclosure. The update process in FIG. 13 is executed by the I/O connection device 200 with a second period. The second period is a period asynchronous with the first period. The second period may be the same as or different from the first period.

The I/O connection device 200 executes a refresh process (Step S201). The refresh process executed by the I/O connection device 200 is the same as the refresh process illustrated in FIG. 5 and description thereof will thus be omitted.

As illustrated in FIG. 13, after executing the refresh process, the I/O connection device 200 executes a flush process (Step S202). The flush process executed by the I/O connection device 200 is the same as the flush process illustrated in FIG. 6 and description thereof will thus be omitted.

As described above, the I/O connection device 200 according to the embodiment executes the refresh process and the flush process with a regular period (a second period) without regard to an instruction from the control device 100.

### 3.3. Example of Softwiring Execution Process

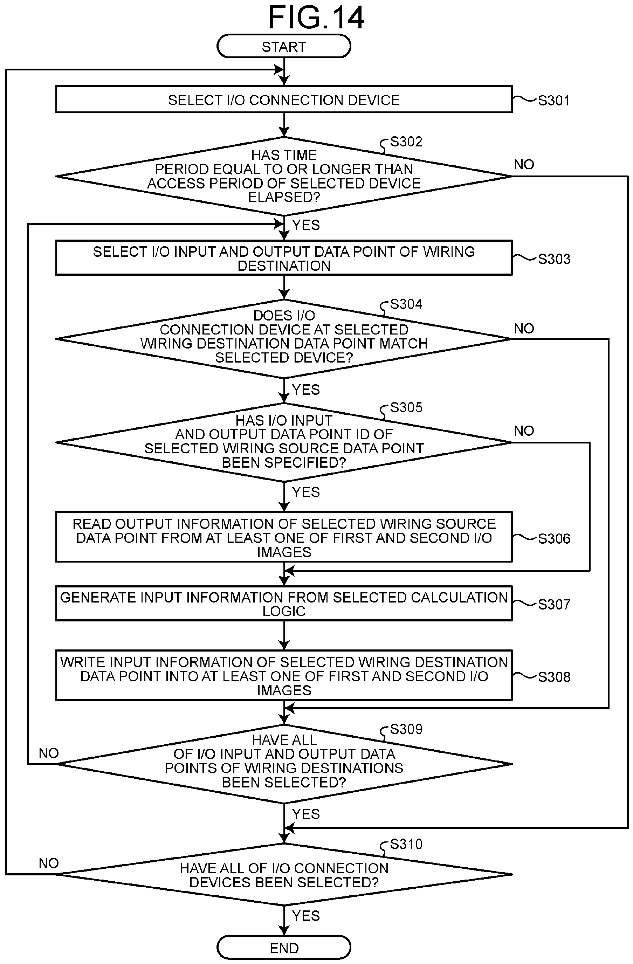

FIG. 14 is a flowchart illustrating an example of a flow of a softwiring execution process according to the embodiment of the present disclosure. The softwiring execution process in FIG. 14 is executed by the information processing device 300 with a third period.

The third period is a period asynchronous with each of the first period and the second period. The third period may be the same as or different from at least one of the first period and the second period.

The information processing device 300 selects the I/O connection device 200 (Step S301). The I/O connection device 200 selected by the information processing device 300 is not necessarily the I/O connection device 200 connected to the network and may be the I/O connection device 200 that has not been connected to the network yet. The I/O connection device 200 selected by the information processing device 300 will hereinafter be also referred to as a selected device 200.

The information processing device 300 determines whether or not a time period equal to or longer than an access period for the selected device 200 has elapsed since the information processing device 300 previously accessed the selected device 200 (Step S302).

In a case where the time period equal to or longer than the access period has not elapsed (Step S302; No), the information processing device 300 proceeds to Step S310.

On the contrary, in a case where a time period equal to or longer than the access period has elapsed (Step S302; Yes), the information processing device 300 selects an I/O input and output data point of a wiring destination (Step S303). The selected I/O input and output data point of the wiring destination will also be referred to as a selected wiring destination data point.

The information processing device 300 determines whether or not the I/O connection device 200 at the selected wiring destination data point matches the selected device 200 (Step S304). The information processing device 300 refers to the softwiring definition information DB 330 and determines whether or not the network device ID of the wiring destination corresponding to the I/O input and output data point ID of the selected wiring destination data point matches the network device ID of the selected device 200.

In a case where the I/O connection device 200 at the selected wiring destination data point does not match the selected device 200 (Step S304; No), the information processing device 300 proceeds to Step S309.

On the contrary, in a case where the I/O connection device 200 at the selected wiring destination data point matches the selected device 200 (Step S304; Yes), the information processing device 300 determines whether or not an I/O input and output data point ID of a selected wiring source data point has been specified (Step S305).

The selected wiring source data point is the I/O input and output data point of the wiring source corresponding to the selected wiring destination data point in the softwiring definition information.

The information processing device 300 refers to the softwiring definition information DB 330 and determines whether or not the softwiring definition information DB 330 includes an I/O input and output data point ID of a wiring source corresponding to the I/O input and output data point ID of the selected wiring destination data point. According to whether or not this I/O input and output data point ID of a wiring source is included, the information processing device 300 determines whether or not an I/O input and output data point ID of a selected wiring source data point has been specified.

In a case where an I/O input and output data point ID of a selected wiring source data point has not been specified (Step S305; No), the information processing device 300 proceeds to Step S307.

On the contrary, in a case where an I/O input and output data point ID of a selected wiring source data point has been specified (Step S305; Yes), the information processing device 300 reads output information of the selected wiring source data point from at least one of the first and second I/O images 222 and 320 (Step S306). By using the I/O input and output data point ID of the selected wiring source data point, the information processing device 300 reads output information of the selected wiring destination data point.

The information processing device 300 generates input information from selected calculation logic (Step S307). The selected calculation logic is calculation logic corresponding to the selected wiring destination data point in the wiring definition information.

The information processing device 300 writes the input information of the selected wiring destination data point into at least one of the first and second I/O images 222 and 320 (Step S308). This input information is a result of calculation of the selected calculation logic.

The information processing device 300 determines whether or not all of I/O input and output data points of wiring destinations have been selected (Step S309).

In a case where not all of the I/O input and output data points have been selected (Step S309; No), the information processing device 300 returns to Step S303.

On the contrary, in a case where all of the I/O input and output data points of the wiring destinations have been selected (Step S309; Yes), the information processing device 300 determines whether or not all of I/O connection devices 200 have been selected (Step S310).

These I/O connection devices 200 are not necessarily I/O connection devices 200 that have been connected to the network, that is, I/O connection devices 200 with actual equipment, and may include any I/O connection device 200 that has not been connected to the network, that is, any I/O connection device 200 without actual equipment.

In a case where not all of the I/O connection devices 200 have been selected (Step S310; No), the information processing device 300 returns to Step S301. On the contrary, in a case where all of the I/O connection devices 200 have been selected (Step S310; Yes), the information processing device 300 ends the process.

As described above, the process control system S according to the embodiment includes the I/O connection device 200, to which the I/O devices 400 are connected, the information processing device 300, and the control device 100. The control device 100 includes the communication unit 110, the acquisition unit 121, and the calculation unit 122.

The communication unit 110 performs communication with the I/O connection device 200 and the information processing device 300, via the network. The acquisition unit 121 acquires input information from at least one of the first I/O image 222 and the second I/O image 320. The I/O connection device 200 has the first I/O image 222. The first I/O image 222 stores input and output information related to the I/O devices 400. The information processing device 300 has the second I/O image 320. The second I/O image 320 stores input and output information related to the I/O devices 400. The calculation unit 122 performs control calculation related to the I/O devices 400 by using the input information.

The process control system S according to the embodiment enables the above described first and second problems to be solved. Furthermore, the process control system S enables a simulation to be made without change in the structure of the first I/O image 222 in the I/O connection device 200. Therefore, the control device 100 is capable of reading the input information without distinguishing the first I/O image 222 and the second I/O image 320 from each other as the target, from which the input information is read (without being aware of whether the input information is read from the first I/O image 222 or the second I/O image 320). Therefore, the process control system S is less hardware dependent and vendor dependent and is able to deal with I/O input and output requests from various control devices 100.

By using the process control system S according to the embodiment, a user is able to conduct a test to check operation of the control device 100 in a state more similar to the actual environment even in a situation where actual equipment of the I/O connection device 200 and the I/O devices 400 is unable to be prepared.

### 4. Other Embodiments

### 4.1. Alias Management Server

The above described process control system S may be configured to enable a user to specify a communication destination using an alias. To implement this configuration, a process control system S_A according to an embodiment includes an alias management server.

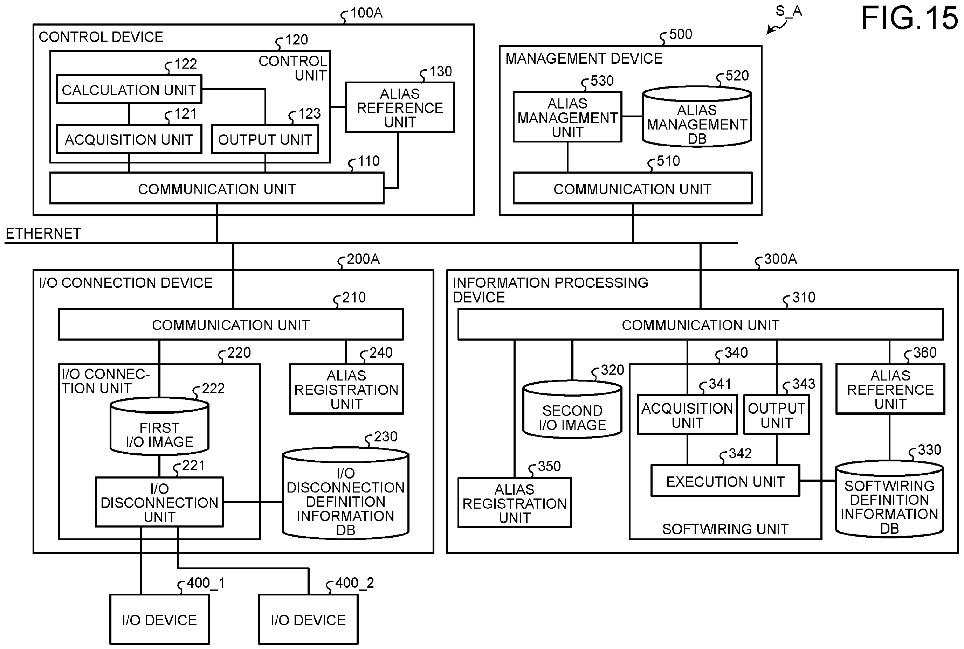

FIG. 15 is a diagram illustrating an example of a configuration of the process control system S_A according to this other embodiment of the present disclosure. The same reference signs will be assigned to components that are the same as those of the process control system S illustrated in FIG. 9 and description thereof will be omitted.

The process control system S_A includes a control device 100A, an I/O connection device 200A, an information processing device 300A, and a management device 500.

### Control Device 100A

The control device 100A includes an alias reference unit 130. The alias reference unit 130 stores correspondence relations between aliases (additional names) and communication partners. The communication partners may be, for example, devices identified by network IDs (such as the I/O connection device 200A and the information processing device 300A) or may be I/O input and output data points identified by I/O input and output data point IDs.

For example, the alias reference unit 130 identifies a communication partner from an alias specified by the communication unit 110 and notifies the communication unit 110 of the communication partner identified. The communication unit 110 performs communication with the communication partner identified by the alias reference unit 130, for example.

Furthermore, the alias reference unit 130 receives an alias change notification from the management device 500 that manages aliases and notifies the control unit 120 of a change in the aliases. The acquisition unit 121 is thereby able to acquire input and output information from I/O images 222 and 320 on the basis of the aliases managed by the management device 500.

### I/O Connection Device 200A

The I/O connection device 200A includes an alias registration unit 240. The alias registration unit 240 requests the management device 500 to register an alias. For example, the alias registration unit 240 requests for registration of the alias in association with the network device ID or I/O input and output data point ID of the I/O connection device 200A, for example. For example, the alias registration unit 240 requests for registration of the alias in association with the I/O input and output data point ID corresponding to the I/O input and output data point of the first I/O image 222. The alias registration unit 240 requests the management device 500 to register an alias related to an I/O device 400.

### Information Processing Device 300A

The information processing device 300A includes an alias registration unit 350 and an alias reference unit 360.

The alias registration unit 350 requests the management device 500 to register an alias. For example, the alias registration unit 350 requests for registration of the alias in association with the network device ID or I/O input and output data point ID of the information processing device 300A, for example. For example, the alias registration unit 350 requests for registration of the alias in association with the I/O input and output data point ID corresponding to the I/O input and output data point of the second I/O image 320. The alias registration unit 350 requests the management device 500 to register an alias related to an I/O device 400 corresponding to the I/O input and output data point of the second I/O image 320.

For example, the alias reference unit 360 identifies a communication partner from an alias specified by the communication unit 310 and notifies the communication unit 310 of the communication partner identified. The communication unit 310 performs communication with the communication partner identified by the alias reference unit 360, for example.

Furthermore, the alias reference unit 360 receives an alias change notification from the management device 500 that manages aliases and notifies the softwiring definition information DB 330 of a change in the aliases.

### Management Device 500

The management device 500 is a general purpose controller, such as a PC or a workstation. The management device 500 includes a communication unit 510, an alias management unit 530, and an alias management DB 520.

The communication unit 510 is a processing unit that controls communication with the control device 100A, the I/O connection device 200A, the information processing device 300A, and any other device. The communication unit 510 has a general purpose network communication function that enables I/O input and output of OPC-UA, for example. The communication unit 510 is implemented by, for example, a communication interface.

The alias management DB 520 is a database holding alias information. The alias information is information having aliases and network device IDs or I/O input and output data point IDs of communication partners, in association with each other.

The alias management unit 530 performs management of the aliases. The alias management unit 530 performs registration of aliases upon receipt of requests from the alias registration unit 240 in the I/O connection device 200A and the alias registration unit 350 in the information processing device 300A.

For example, the alias management unit 530 registers alias information having aliases included in registration requests from the alias registration units 240 and 350, in association with network devices IDs or I/O input and output data point IDs.

The alias management unit 530 stores the alias information into the alias management DB 520, for example. Furthermore, the alias management unit 530 notifies the alias reference unit 130 in the control device 100A and the alias reference unit 360 in the information processing device 300A, of the alias information.

In a case where a network device ID or an I/O input and output data point ID included in an alias registration request has already been registered, the alias management unit 530 updates (changes) the alias information. For example, the alias management unit 530 overwrites the alias corresponding to the network device ID or the I/O input and output data point ID with the alias included in the registration request.

The alias management unit 530 notifies the alias reference unit 130 in the control device 100A and the alias reference unit 360 in the information processing device 300A, of the alias information that has been updated.

According to the above description, the alias registration units 240 and 350 register and update (change) aliases by using registration requests, but the alias registration unit 240 or 350 may update (change) an alias by using a change request.

### 4.2. Process Synchronization

In the above described embodiment, the I/O connection device 200 and the information processing device 300 execute an update process and a softwiring execution process asynchronously with each other but these processes may be executed synchronously with each other.

For example, in a case where a wiring destination in softwiring definition information held in the softwiring definition information DB 330 is actual equipment of the I/O connection device 200, the softwiring unit 340 and the I/O connection device 200 are to be synchronized with each other.

In a case where the operation of the I/O connection device 200 that is actual equipment and the operation of the softwiring unit 340 (the simulation function of the I/O connection device 200) are not synchronized with each other, if their operation periods are disturbed, a simulation made in the process control system S may be in an abnormal state.

Specifically, it is supposed that the operation periods of the I/O connection device 200 and the softwiring unit 340 are disturbed in a case where a pulse signal that become ON for only one period is generated by the softwiring unit 340. In this case, the control unit 120 may miss the time when the pulse signal is being ON.

Unlike simulations, actual equipment has an architecture with a period that is not disturbed and thus does not have such a problem, but common simulator machines often do not have specifications to adjust such periods.

Therefore, a process control system S_B including an I/O connection device 200B and an information processing device 300B that operate in synchronization with each other will be described hereinafter.

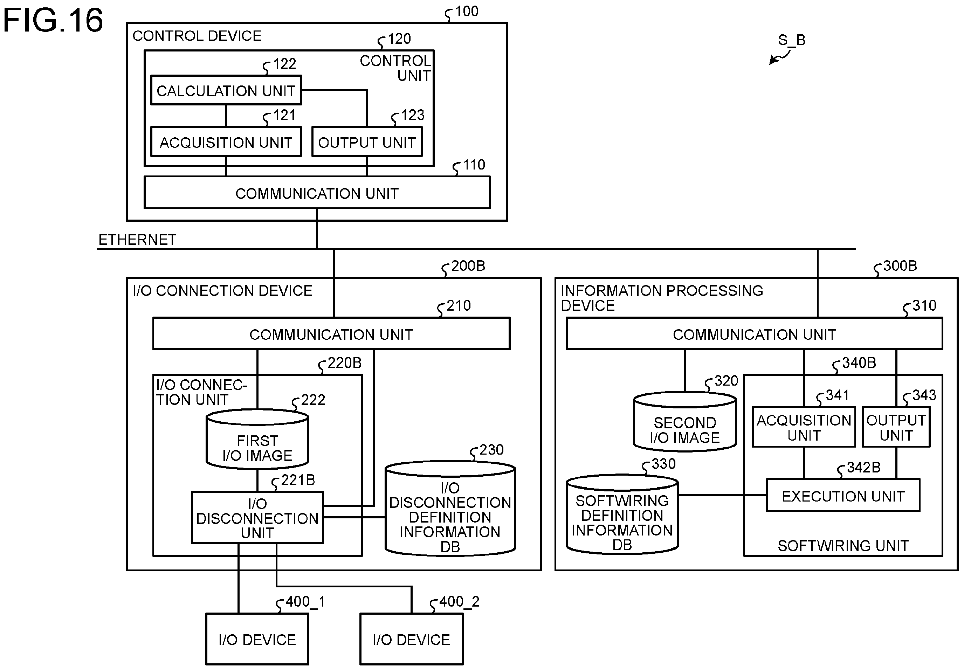

FIG. 16 is a diagram illustrating an example of a configuration of the process control system S_B according to another embodiment of the present disclosure. The same reference signs will be assigned to components that are the same as those of the process control system S illustrated in FIG. 9 and description thereof will be omitted.

The process control system S_B includes the I/O connection device 200B and the information processing device 300B. The I/O connection device 200B includes an I/O disconnection unit 221B.

The I/O disconnection unit 221B transmits a wiring execution request to request execution of a softwiring execution process, to a softwiring unit 340B in the information processing device 300B. The I/O disconnection unit 221B transmits the wiring execution request via a communication unit 210.

The rest of the operation of the I/O disconnection unit 221B is the same as that of the I/O disconnection unit 221 illustrated in FIG. 9. The I/O disconnection unit 221B operates asynchronously with a control unit 120 of a control device 100. That is, an update process by the I/O disconnection unit 221B is executed asynchronously with a control process by the control unit 120.

The information processing device 300B includes the softwiring unit 340B. The softwiring unit 340B includes an execution unit 342B. The execution unit 342B executes the softwiring execution process according to the wiring execution request from the I/O disconnection unit 221B in the I/O connection device 200B.

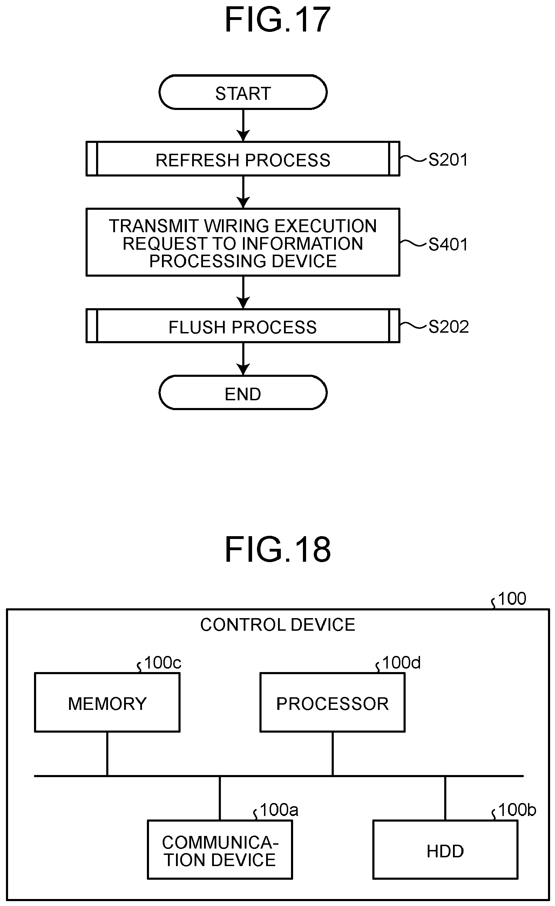

FIG. 17 is a flowchart illustrating an example of a flow of an update process by the I/O connection unit 200B according to this other embodiment of the present disclosure. The update process in FIG. 17 is executed by the I/O connection device 200B with a second period. The second period is a period not in synchronization with a first period of the control process executed by the control device 100. The second period may be the same as or different from the first period.

The I/O connection device 200B executes a refresh process (Step S201). The refresh process executed by the I/O connection device 200B is the same as the refresh process illustrated in FIG. 5 and description thereof will thus be omitted.

As illustrated in FIG. 17, after executing the refresh process, the I/O connection device 200B transmits a wiring execution request to the information processing device 300B (Step S401). The I/O connection device 200B executes a flush process (Step S202). The flush process executed by the I/O connection device 200B is the same as the flush process illustrated in FIG. 6 and description thereof will thus be omitted.

As described above, by the I/O connection device 200B transmitting a wiring execution request to the information processing device 300B, the I/O connection device 200B and the information processing device 300B are able to operate in synchronization with each other.

The process control system S_B is able to achieve effects similar to those of the process control system S and also enables a simulation to be more properly executed by allowing the I/O connection device 200B and the information processing device 300B to operate in synchronization with each other.

### 5. System

The processing steps, control steps, specific names, and information including various data and parameters, which have been described above and illustrated in the drawings may be optionally modified unless particularly stated otherwise.

Furthermore, the components of each device in the drawings have been illustrated functionally and/or conceptually, and do not need to be physically configured as illustrated in the drawings. That is, specific modes of separation and integration of each device are not limited to those illustrated in the drawings. That is, all or part of each device may be configured by functional or physical separation or integration in any units according to various loads and use situations.

Furthermore, all or any part of the processing functions performed in the devices may be implemented by a CPU and a program analyzed and executed by the CPU or may be implemented as hardware by wired logic.

### 6. Hardware

An example of a hardware configuration of the control device 100 will be described next. FIG. 18 is a diagram illustrating the example of the hardware configuration of the control device 100. As illustrated in FIG. 18, the control device 100 has a communication device 100a, a hard disk drive (HDD) 100b, a memory 100c, and a processor 100d. Furthermore, these units illustrated in FIG. 18 are connected to one another via a bus, for example.

The communication device 100a is, for example, a network interface card, and performs communication with another server. The HDD 100b stores a DB and a program that causes the functions illustrated in FIG. 9 to operate.

The processor 100d causes a process to be operated, the process executing the functions described by reference to FIG. 9, for example, by reading, from the HDD 100b, the program that executes the same processing as the processing units illustrated in FIG. 9 and loading the program into the memory 100c. For example, this process executes the same functions as the processing units included in the control device 100. Specifically, the processor 100d reads a program having the same functions as the acquisition unit 121, the calculation unit 122, and the output unit 123, from the HDD 100b, for example. The processor 100d then executes a process to execute the same processing as the acquisition unit 121, the calculation unit 122, and the output unit 123, for example.

As described above, the control device 100 operates as a device that executes various processing methods by reading and executing the program. Furthermore, the control device 100 may implement the same functions as the above described embodiment by reading the program from a recording medium by means of a medium reading device, and executing the program read. The program referred to herein is not necessarily executed by the control device 100. For example, the present invention may be similarly applied to a case where another computer or server executes the program, or a case where the computer and the server execute the program in corporation with each other.

This program may be distributed via a network, such as the Internet. Furthermore, the program may be executed by being recorded in a computer-readable recording medium, such as a hard disk, a flexible disk (FD), a CD-ROM, a magneto-optical disk (MO), or a digital versatile disc (DVD), and being read from the recording medium by a computer.

An example of the hardware configuration of the control device 100 has been described herein, but the control device 100A, the I/O connection devices 200, 200A, and 200B, and the information processing devices 300, 300A, and 300B, for example, may be implemented by hardware configurations similar to the example.

### 7. Others

The following are some examples of a combination of technical features disclosed herein.
(1) A control device, comprising:
   a communication unit that performs communication with an I/O connection device where an I/O device is connected and an information processing device, via a network;
   an acquisition unit that acquires device information related to the I/O device from at least one of a first storage unit included in the I/O connection device and storing the device information and a second storage unit included in the information processing device and storing the device information; and
   a calculation unit that performs control calculation related to the I/O device by using the device information.
(2) The control device according to (1), further comprising an output unit that stores a result of execution of the control calculation into at least one of the first storage unit and the second storage unit.
(3) The control device according to (1) or (2), wherein the information processing device
   acquires the device information according to a result of the control calculation by the calculation unit, from at least one of the first storage unit and the second storage unit,
   executes calculation logic related to the I/O device, and
   stores a result of execution of the calculation logic into at least one of the first storage unit and the second storage unit.
(4) The control device according to (3), wherein
   the information processing device executes the calculation logic related to the I/O device on the basis of wiring definition information, and
   the wiring definition information includes information identifying the I/O connection device where the I/O device is connected.
(5) The control device according to (3) or (4), wherein the information processing device acquires the device information according to an access period corresponding to the I/O connection device.
(6) The control device according to (5), wherein the information processing device executes the calculation logic in a case where the access period has elapsed.
(7) The control device according to any one of (3) to (6), wherein the information processing device executes the calculation logic related to the I/O device for each I/O connection device.
(8) The control device according to (7), wherein the information processing device executes the calculation logic related to the I/O device in a case where the I/O device of a wiring destination has been connected to the I/O connection device that is a target of execution of the calculation logic.
(9) The control device according to any one of (1) to (8), wherein the acquisition unit acquires the device information on the basis of an alias managed by an alias management device.
(10) The control device according to (9), wherein the I/O connection device includes an alias registration unit that requests the alias management device to register the alias related to the I/O device corresponding to the device information stored in the first storage unit.
(11) The control device according to (9) or (10), wherein the information processing device includes an alias registration unit that requests the alias management device to register the alias related to the I/O device corresponding to the device information stored in the second storage unit.
(12) The control device according to any one of (1) to (11), wherein in a case where a request for execution of calculation logic has been received from the I/O connection device, the information processing device executes the calculation logic.
(13) A control method, including:
   performing communication with an I/O connection device where an I/O device is connected and an information processing device, via a network;
   acquiring device information related to the I/O device from at least one of a first storage unit included in the I/O connection device and storing the device information and a second storage unit included in the information processing device and storing the device information; and
   performing control calculation related to the I/O device by using the device information.
(14) A control system, comprising:
   an I/O connection device where an I/O device is connected;
   an information processing device; and
   a control device, wherein
   the control device comprises:
      a communication unit that performs communication with the I/O connection device and the information processing device, via a network;
      an acquisition unit that acquires device information related to the I/O device from at least one of a first storage unit included in the I/O connection device and storing the device information and a second storage unit included in the information processing device and storing the device information; and
      a calculation unit that performs control calculation related to the I/O device by using the device information.

According to the present invention, it is possible to enable implementation of a simulation function in an open process control system.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A control device (100), comprising:
a communication unit (110) that performs communication with an I/O connection device (200) where an I/O device (400) is connected and an information processing device (300), via a network;
an acquisition unit (121) that acquires device information related to the I/O device (400) from at least one of a first storage unit (222) included in the I/O connection device (200) and storing the device information and a second storage unit (320) included in the information processing device (300) and storing the device information; and
a calculation unit (122) that performs control calculation related to the I/O device (400) by using the device information.

2. The control device (100) according to claim 1, further comprising an output unit (123) that stores a result of execution of the control calculation into at least one of the first storage unit (222) and the second storage unit (320).

3. The control device (100) according to claim 1, wherein the information processing device (300)
acquires the device information according to a result of the control calculation by the calculation unit (122), from at least one of the first storage unit (222) and the second storage unit (320),
executes calculation logic related to the I/O device (400), and
stores a result of execution of the calculation logic into at least one of the first storage unit (222) and the second storage unit (320).

4. The control device (100) according to claim 3, wherein
the information processing device (300) executes the calculation logic related to the I/O device (400) on the basis of wiring definition information, and
the wiring definition information includes information identifying the I/O connection device (200) where the I/O device (400) is connected.

5. The control device (100) according to claim 3, wherein the information processing device (300) acquires the device information according to an access period corresponding to the I/O connection (200) device.

6. The control device (100) according to claim 5, wherein the information processing device (300) executes the calculation logic in a case where the access period has elapsed.

7. The control device (100) according to claim 3, wherein the information processing device (300) executes the calculation logic related to the I/O device (400) for each I/O connection device (200).

8. The control device (100) according to claim 7, wherein the information processing device (300) executes the calculation logic related to the I/O device (400) in a case where the I/O device (400) of a wiring destination has been connected to the I/O connection device (200) that is a target of execution of the calculation logic.

9. The control device (100) according to claim 1, wherein the acquisition unit (121) acquires the device information on the basis of an alias managed by an alias management device (500).

10. The control device (100) according to claim 9, wherein the I/O connection device (200) includes an alias registration unit (240) that requests the alias management device (500) to register the alias related to the I/O device (400) corresponding to the device information stored in the first storage unit (222).

11. The control device (100) according to claim 9, wherein the information processing device (300) includes an alias registration unit (240) that requests the alias management device (500) to register the alias related to the I/O device (400) corresponding to the device information stored in the second storage unit (320).

12. The control device (100) according to claim 1, wherein in a case where a request for execution of calculation logic has been received from the I/O connection device (200), the information processing device executes the calculation logic.

13. A control method, including:
performing communication with an I/O connection device (200) where an I/O device (400) is connected and an information processing device (300), via a network;
acquiring device information related to the I/O device (400) from at least one of a first storage unit (222) included in the I/O connection device (200) and storing the device information and a second storage unit (320) included in the information processing device (300) and storing the device information; and
performing control calculation related to the I/O device (400) by using the device information.

14. A control system, comprising:
an I/O connection device (200) where an I/O device (400) is connected;
an information processing device (300); and
a control device (100), wherein
the control device (100) comprises:
a communication unit (110) that performs communication with the I/O connection device (200) and the information processing device (300), via a network;
an acquisition unit (121) that acquires device information related to the I/O device (400) from at least one of a first storage unit (222) included in the I/O connection device (200) and storing the device information and a second storage unit (320) included in the information processing device (300) and storing the device information; and
a calculation unit (122) that performs control calculation related to the I/O device (400) by using the device information.
